# EUROPÄISCHE PATENTSCHRIFT

(11) **EP 0 574 732 B1**
(45) Veröffentlichungstag und Bekanntmachung des Hinweises auf die Patenterteilung: **14.08.1996**
(21) Anmeldenummer: 93108317.4
(22) Anmeldetag: 22.05.1993
(51) Int. Cl.: B65G 1/04, B65G 1/137

(54) **Warenlager zur Lagerung von Stückgut**
Warehouse for storing piece-goods
Magasin pour le stockage d'objets

(30) Priorität: 18.06.1992 CH 1929/92
(43) Veröffentlichungstag der Anmeldung: 22.12.1993
(73) Patentinhaber: Digitron AG, CH-5000 Aarau (CH)
(72) Erfinder: Kälin, Heinrich, W-4005 Meerbusch 3 (DE)
(74) Vertreter: Blum, Rudolf Emil Ernst

(56) Entgegenhaltungen:
- EP-A- 0 029 073
- DE-A- 3 205 708
- DE-U- 9 103 198
- US-A- 3 750 804
- US-A- 4 566 838

## Beschreibung

Die Erfindung betrifft ein Warenlager zur Lagerung von Stückgut mit mindestens einem Regal und mindestens einem Regalbediengerät, wobei in jeder Regalposition mehrere Stückguteinheiten hintereinander auf einer gemeinsamen Auflageplatte Platz finden, welche vom Regalbediengerät aus dem Lager herausziehbar und wieder einschiebbar ist.

Zur effizienten Ausnützung des Lagerraums können die Regale eines Stückgutlagers so tief gebaut werden, dass von der Regalgasse her gesehen in einer Regalposition mehrere Stückguteinheiten hintereinander Platz finden. Dies erfordert aber ein speziell konstruiertes Regalbediengerät, welches in der Lage ist, beliebige Stückgutplätze des Lagers zu beschicken. Eine solche Anlage wird im Deutschen Gebrauchsmuster DE-U-91 03 198.2 beschrieben. In der dort beschriebenen Anordnung besteht das Stückgut aus Lagerbehältern, welche in den Regalen nur an ihren seitlichen Bodenrändern gestützt werden, so dass das Regalbediengerät sie von unten ergreifen kann. Dazu wird ein Teleskoptisch unter die hintereinanderliegenden Behälter gefahren, hochgehoben und wieder zurückgezogen, so dass alle hintereinanderliegenden Behälter ins Regalbediengerät transferiert werden. Dort werden einzelne Behälter vom Teleskoptisch entnommen und neue Behälter auf den Teleskoptisch geschoben. Danach fährt der Teleskoptisch wieder aus und deponiert die Behälter im Regal.

Das beschriebene System hat den Nachteil, dass die Behälter im Regal nicht auf einer Fläche stehen, sondern nur seitlich gestützt sind. Bei Verwendung von Karton- oder Kunststoffbehältern kann dies zu einer Verformung der Behälter führen.

In einem anderen System, welches als europäische Patentanmeldung EP-A-0 029 073 veröffentlicht wurde, steht hintereinanderliegendes Stückgut einer Regalposition auf einer gemeinsamen Regalpalette, welche vom Regalbediengerät aus dem Lager herausgezogen wird. Jedes einzelne Stückgut kann im Regalbediengerät von einem fahrbaren Gabelstapler erfasst und aus der Regalpalette entnommen werden. Dazu muss aber jedes Stückgut so gestaltet sein, dass es vom Gabelstapler erfasst werden kann, was in der Regel dadurch geschieht, dass es auf einer passenden Palette liegt. Ein weiterer Nachteil des Systems liegt in seiner langsamen Umschlagzeit, da der Gabelstapler bei jeder Operation positioniert werden muss und auch sein Greifmechanismus relativ langsam ist.

Deshalb stellt sich die Aufgabe, ein Warenlager zu konzipieren, bei welchem in jeder Regalposition mehrere Stückguteinheiten, z.B. Lagerbehälter, hintereinander Platz finden, wobei jedes Stückgut möglichst auf seiner ganzen Bodenfläche abgestützt ist. Das Stückgut sollte keine speziellen Vorrichtungen aufweisen müssen, die es dem Regalbediengerät ermöglicht, es zu ergreifen. Ausserdem soll die Umschlagzeit im Regalbediengerät möglichst kurz sein.

Diese Aufgabe wird durch die in den Patentansprüchen beschriebene Erfindung gelöst.

Vorteile der Erfindung liegen darin, dass jedes Stückgut auf einer schubladenartigen Auflagefläche liegt, so dass sein Gewicht gleichmässig auf seinen Boden verteilt wird. Ausserdem wird vom Regalbediengerät nur jenes Stückgut verschoben, welches ein- oder auszulagern ist, währenddem das restliche Stückgut auf der Auflagefläche nicht bewegt wird. Dies reduziert die Beschädigung oder Abnützung des Stückgutbehälters. Die mehrfachtiefe Lagerung und die Art der Beschickung erlauben eine hohe Lagerdichte. Das Regalbediengerät kann so konzipiert werden, dass mehrere Ein- und Auslagerungen pro Gassenfahrt gemacht werden können. Die Umschlagzeit pro Ein- oder Auslagerung ist sehr kurz. Die im folgenden beschriebenen Auflageplatten können so gestaltet werden, dass sie stapelbar sind und beim Transport, vor dem Einbringen ins Regal, sehr wenig Platz beanspruchen.

Weitere Vorteile ergeben sich aus der nachfolgenden Beschreibung eines Ausführungsbeispiels der Erfindung anhand der Figuren. Dabei zeigen:
Figur 1 eine Aufsicht auf das Regalbediengerät und das Regal beim Stückgutumschlag;
Figur 2 eine Seitenansicht des Regalbediengeräts;
Figur 3 eine Aufsicht auf das Regalbediengeräts auf der Höhe des Vorratsbereichs II;
Figur 4 die dem Regal vorgelagerte Ein- und Ausladeposition in Seitenansicht;
Figur 5 die Auflageplatte in Seitenansicht;
Figur 6 die Auflageplatte in Aufsicht;
Figur 7 eine Aufsicht auf die im Regal gehaltenen Auflageplatten; und
Figur 8 zwei gestapelte Auflageplatten in Seitenansicht.

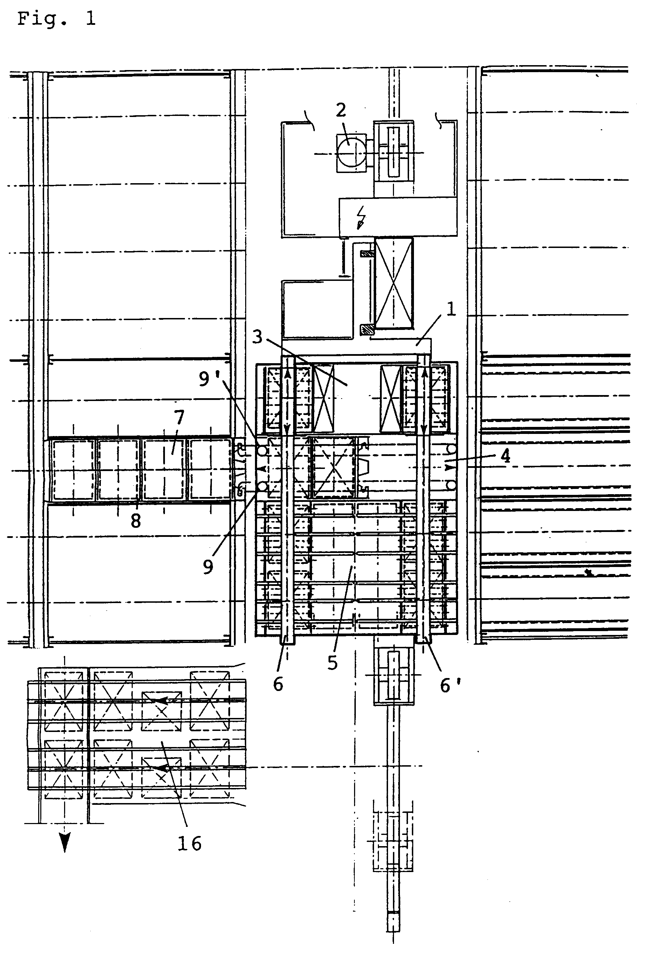

Figur 1 zeigt eine Uebersicht über die Teile des Warenlagers. Das Regalbediengerät befindet sich fahrbar in der Lagergasse. Eine Ladeplattform kann in der Höhe von einem Elektromotor 2 verstellt werden. Die Ladeplattform besteht im wesentlichen aus einem Einlagerabschnitt 3, einem Transferabschnitt 4 und einem Auslagerabschnitt 5. Zwei Umsetzvorrichtungen 6, 6' erlauben es, Stückgut zwischen den Abschnitten zu verschieben. Die Umsetzvorrichtung kann z.B. aus von oben zwischen das Stückgut greifenden Mitnehmern bestehen, welche mit einem Antrieb verbunden sind, welcher oberhalb des Stückguts in Regalgassenrichtung entlang der Ladeplattform angeordnet ist. Die Mitnehmer können damit seitlich gegen das zu bewegende Stückgut gedrückt werden, worauf sich dieses in der gewünschten Richtung verschiebt. Eine solche Umsetzvorrichtung ist z.B. im Deutschen Gebrauchsmuster G 91 03 198.2 beschrieben.

Zum Be- und Entladen des Regalbediengeräts ist dem Regal eine Ein- und Ausladevorrichtung 16 vorgelagert.

Die Regale beidseits der Lagergasse bestehen aus Traggestellen, in welchen Auflageplatten liegen. In jeder Regalposition können bis zu vier Stückguteinheiten 7 auf einer gemeinsamen Auflageplatte 8 hintereinander stehen. Beim Ein- oder Auslagern wird die Auflageplatte 8 von zwei kettenbetriebenen Mitnehmern 9, 9' in den Transferabschnitt 4 soweit aus dem Regal gezogen, dass die zu beschickende Position der Auflageplatte im Bereich der regalseitigen Umsetzvorrichtung 6 liegt. Die Umsetzvorrichtung 6 schiebt dann beim Auslagern das Stückgut 7 von der Auflageplatte in den Auslagerabschnitt 5 und beim Einlagern vom Einlagerabschnitt 3 auf die Auflageplatte. Dies erlaubt es, dass Ein- und Auslagerung gleichzeitig stattfinden können. Danach wird die Auflageplatte 8 wieder in das Regal eingeschoben. Somit verbleibt die Auflageplatte an ihrem jeweiligen Regalplatz.

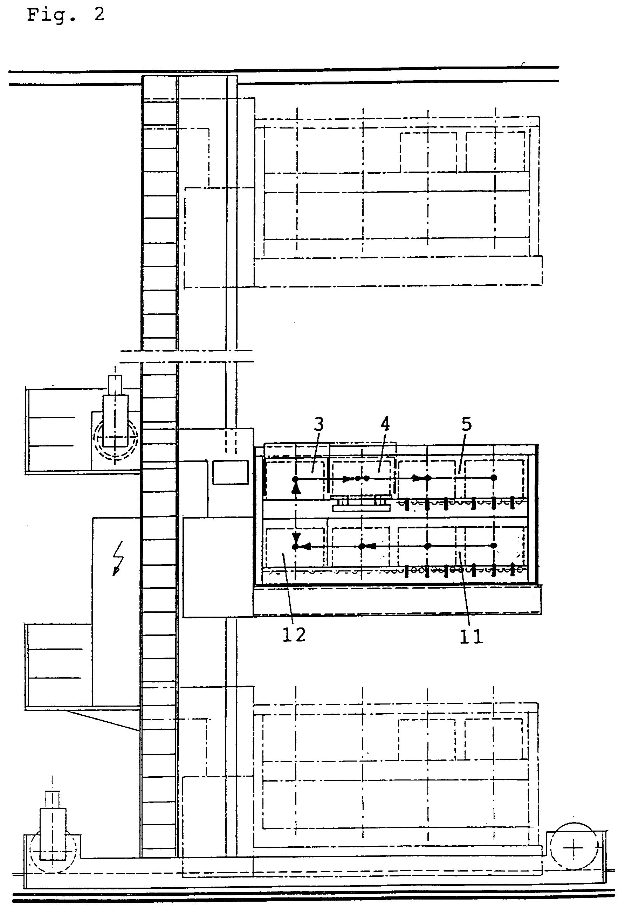

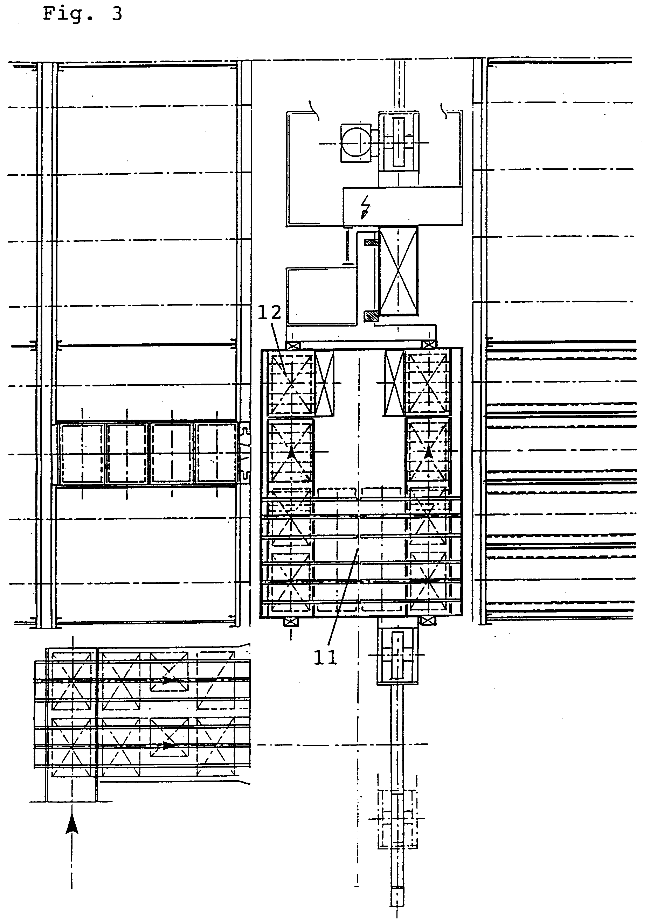

Der Weg der Lagerbehälter im Regalbediengerät wird aus den Figuren 1 bis 3 ersichtlich. Auf dem Regalbediengerät befinden sich bis zu acht einzulagende Stückguteinheiten in einem Zwischenlager 11, welches sich unterhalb des Auslagerabschnitts 5 befindet. Zum Einlagern werden sie auf Position 12 unterhalb des Einlagerabschnitts befördert (Fig. 2; 3), von wo sie mittels eines Stückgutlifts in den Einlagerbereich 3 gehoben werden.

Das auszulagernde Stückgut wird auf den 8 Plätzen des Auslagerabschnitts 5 angeordnet. Sowohl das Zwischenlager 11 als auch der Auslagerabschnitt 5 besitzen Fördermechanismen, welche es erlauben, Lagerbehälter quer zur Lagergassenrichtung zu verschieben.

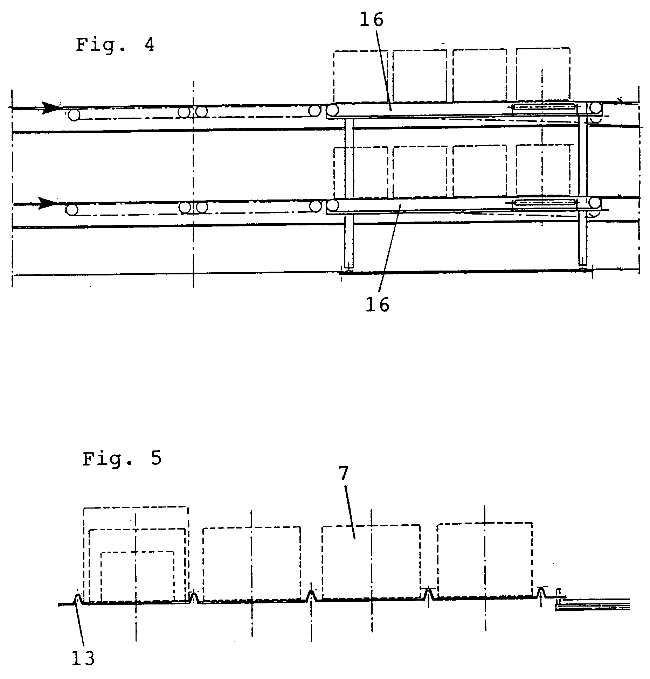

Das Regalbediengerät wird in der vorgelagerten Ein- und Ausladevorrichtung 16 be- und entladen, welche in Figur 4 gezeigt wird. Die Konstruktion dieser Ein- und Ausladevorrichtung wird dadurch vereinfacht, dass sich das einzulagernde Stückgut im Zwischenlager 11 des Regalbediengeräts genau unter dem auszulagernden Stückgut im Auslagerabschnitt 5 befindet. Somit kann sie aus zwei gleichartigen, übereinander angeordneten Einheiten bestehen.

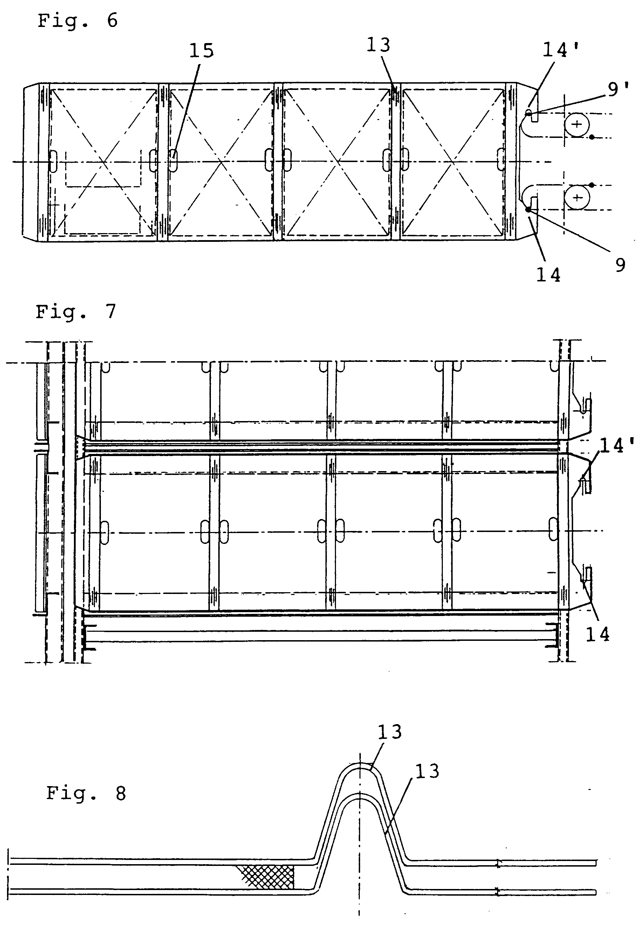

Die Figuren 5 und 6 zeigen eine Ausführung einer einzelnen Auflageplatte 8. Sie besteht aus einem Blechstück, welches Querfalten 13 in der Form von Ausbiegungen aufweist, welche ein Verrutschen des Stückgutes zwischen einzelnen Stückgutplätzen beim Herausziehen und Einschieben der Auflageplatte verhindern. An einem Ende der Auflageplatte befinden sich Aussparungen 14, 14', in welche die kettengetriebenen Mitnehmer 9, 9' des Regalbediengeräts einfahren können.

Figur 7 zeigt, wie die Auflageplatten im Regal angeordnet sind, so dass die Aussparungen 14, 14' freiliegen.

In die Auflageplatten sind Oeffnungen 15 eingestanzt, welche ein Abfliessen von Sprinklerwasser ermöglichen.

Die beschriebenen Auflageplatten haben den Vorteil, dass sie raumsparend stapelbar sind, wie in Figur 8 gezeigt wird. Eine dünne Schicht von Styropor oder Pappe verhindert dabei, dass sich übereinanderliegende Querfalten 13 ineinander verkeilen. Die durch die Stapelung erreichte Reduktion des Transportvolumens verbilligt die Installation grosser Warenlager erheblich und vereinfacht die Installation.

## Patentansprüche

1. Warenlager zur Lagerung von Stückgut, mit mindestens einem Regal und mindestens einem Regalbediengerät, wobei in jeder Regalposition mehrere Stückguteinheiten hintereinander auf einer gemeinsamen Auflageplatte (8) Platz finden, welche vom Regalbediengerät aus dem Regal herausziehbar und wieder einschiebbar ist, dadurch gekennzeichnet, dass das Stückgut (7) mittels einer oder mehrerer Umsetzvorrichtungen (6,6') des Regalbediengeräts einzeln durch Schieben oder Ziehen zwischen dem Regalbediengerät und der ausgefahrenen Auflageplatte verschiebbar ist, wobei die Auflageplatte in ihrem Regalplatz verbleibt.

2. Warenlager nach Anspruch 1, dadurch gekennzeichnet, dass die Umsetzvorrichtung (6) in festem Abstand zum Regal angeordnet ist und dass die Auflageplatte soweit aus dem Regal ausziehbar ist, dass jede auf ihr befindliche Stückgutposition in den Wirkungsbereich der Umsetzvorrichtung bringbar ist.

3. Warenlager nach einem der vorangehenden Ansprüche, wobei die Auflageplatte (8) am lagergassenseitigen Ende (14,14') derart ausgebildet ist, dass sie von einem oder mehreren Mitnehmern des Regalbediengeräts zum Ausziehen aus dem bzw. Einfahren in das Regal erfassbar ist.

4. Warenlager nach einem der vorangehenden Ansprüche, dadurch gekennzeichnet, dass in der Umsetzvorrichtung (6) zum Verschieben des Stückguts ein oder mehrere Schieber seitlich gegen das Stückgut schiebbar sind.

5. Warenlager nach einem der vorangehenden Ansprüche, dadurch gekennzeichnet, dass das Regalbediengerät einen Einlager- (3) und einen Auslagerabschnitt (5) aufweist, zwischen welchen sich die Auflageplatte (8) im ausgefahrenen Zustand befindet, so dass das Stückgut mittels der Umsetzvorrichtung (6,6') von der Auflageplatte in den Auslagerabschnitt und vom Einlagerabschnitt auf die Auflageplatte verschiebbar ist.

6. Warenlager nach Anspruch 5, dadurch gekennzeichnet, dass der Einlagerabschnitt (3) und der Auslagerabschnitt (5) des Regalbediengeräts mehrere Plätze für Stückgut enthalten, wobei das Stückgut zwischen diesen Plätzen verschiebbar ist.

7. Warenlager nach Anspruch 6, dadurch gekennzeichnet, dass die Einlager- (3) und Auslagerabschnitte (5) in einer gemeinsamen Ebene des Regalbediengeräts liegen, und dass in einer weiteren Ebene ober- oder unterhalb ein Zwischenlager (11) für Stückgut angeordnet ist, welches mit dem Ein- oder Auslagerabschnitt über einen Stückgutlift verbunden ist.

8. Warenlager nach Anspruch 7, dadurch gekennzeichnet, dass beim Be- und Entladen des Regalbediengeräts an einer vorgelagerten Ein- und Ausladevorrichtung (16) das einzulagernde und das auszulagernde Stückgut in verschiedenen Ebenen übereinander liegt.

9. Auflageplatte eines Warenlagers nach einem der vorangehenden Ansprüche, dadurch gekennzeichnet, dass sie zwischen den Stückgutplätzen Erhöhungen (13) aufweist als Sicherung gegen das Verrutschen des Stückguts zwischen einzelnen Stückgutplätzen beim Herausziehen und Einschieben der Auflageplatte.

10. Auflageplatte nach Anspruch 9 dadurch gekennzeichnet, dass sie aus einer flachen Platte besteht, welche querliegende Falten zwischen den Stückgutplätzen aufweist.

11. Auflageplatte nach einem der Ansprüche 9 oder 10, dadurch gekennzeichnet, dass sie Löcher (15) zum Abfluss von Flüssigkeit aufweist.

12. Auflageplatte nach einem der Ansprüche 9 bis 11, dadurch gekennzeichnet, dass beim Stapeln der Auflageplatten Erhöhungen einer Auflageplatte in Ausbuchtungen der nächst höheren Platte eingreifen.

## Claims

1. Warehouse for storing articles with at least one shelf and at least one shelf accessing device, wherein in each shelf position there is room for a plurality of articles one behind the other on a common support plate (8), which support plate can be pulled from and pushed back into the shelf by means of the shelf accessing device, characterized in that the articles (7) can be shifted by pulling or pushing between the shelf accessing device and the extended support plate by means of one or more transport devices (6, 6') of the shelf accessing device, wherein the support plate remains in its shelf position.

2. Warehouse of claim 1 characterized in that the transport device (6) is arranged at a fixed distance from the self and that the support plate can be pulled such far from the shelf that each of the article positions thereon can be brought into the area of operation of the transport device.

3. Warehouse of one of the preceding claims wherein the support plate (8) is designed at its warehouse-alley-side (14,14') such that it can be engaged by one or more cams of the shelf accessing device for being pulled out from and pushed into the shelf, respectively.

4. Warehouse of one of the preceding claims characterized in that in the transporting device (6) one or more pushers can be pushed laterally against the article for shifting the article.

5. Warehouse of one of the preceding claims characterized in that the shelf accessing device comprises an input storage (3) and an output storage (5) section, between which the support plate (8) is arranged in its extended position, such that by means of the transport device (6, 6') the article can be shifted between the support plate into the output storage section and from the input storage section onto the support plate.

6. Warehouse of claim 5, characterized in that the input storage section (3) and the output storage section (5) of the shelf accessing device comprise several positions for articles, wherein the articles can be moved between these positions.

7. Warehouse of claim 6, characterized in that the input storage (3) and the output storage (5) sections are arranged in a common plane of the shelf accessing device and that an intermediate storage (11) for articles is arranged in a further plane above or below, which intermediate storage is connected to the input or output storage section by means of an article lift.

8. Warehouse of claim 7, characterized in that during loading and unloading of the shelf accessing device at a remote loading and unloading device (16) the articles to be stored and the articles to be retrieved are lying in different planes above each other.

9. Support plate of a warehouse of one of the preceding claims characterized in that it comprises elevations (13) between the article positions against a displacement of the articles between the individual article positions during pulling out and pushing in of the support plate.

10. Support plate of claim 9 characterized in that it consists of a flat plate containing transverse folds between the article positions.

11. Support plate of one of the claims 9 or 10, characterized in that it comprises holes (15) for draining fluids.

12. Support plate of one of the claims 9 to 11 characterized in that during stacking of the support plates the elevations of one support plate engage recesses in the next upper plate.

## Revendications

1. Magasin pour entreposer des marchandises en pièces, avec au moins une étagère et au moins un dispositif d'emmagasinage, plusieurs pièces de marchandise trouvant place l'une derrière l'autre sur une plaque réceptrice commune (8) pouvant être extraite de l'étagère et y être réinsérée par le dispositif d'emmagasinage, caractérisé en ce que les pièces (7) peuvent être déplacées par poussée ou traction au moyen d'une ou de plusieurs unités de manutention (6, 6') du dispositif d'emmagasinage entre ce dispositif et la plaque réceptrice lorsqu'elle est extraite de l'étagère, tout en restant à sa place par rapport à celle-ci.

2. Magasin selon la revendication 1, caractérisé en ce que l'unité de manutention (6) est agencée à distance fixe de l'étagère et que la plaque réceptrice peut être extraite de l'étagère d'une distance suffisant à amener l'emplacement de chaque pièce sur cette plaque dans le rayon d'action de l'unité de manutention.

3. Magasin selon une des revendications précédentes, caractérisé en ce qu'à son extrémité extérieure (14, 14') la plaque réceptrice (8) est conformée de manière à pouvoir être saisie par un ou plusieurs organes d'entraînement du dispositif d'emmagasinage afin d'extraire la plaque de l'étagère ou de la repousser dans celui-ci.

4. Magasin selon une des revendications précédentes, caractérisé en ce que l'unité de manutention (6) comporte un ou plusieurs poussoirs pouvant appuyer latéralement contre la pièce pour la déplacer.

5. Magasin selon une des revendications précédentes, caractérisé en ce que le dispositif d'emmagasinage comporte une section d'entrée (3) et une section de sortie (5) entre lesquelles se trouve la plaque réceptrice (8) lorsqu'elle est extraite de l'étagère, de façon à ce que la pièce puisse être déplacée au moyen de l'unité de manutention (6, 6') de la plaque réceptrice vers la section de sortie, ainsi que de la section d'entrée vers la plaque réceptrice.

6. Magasin selon la revendication 5, caractérisé en ce que la section d'entrée (3) et la section de sortie (5) du dispositif d'emmagasinage comportent plusieurs emplacements pour la marchandise en pièces, ces pièces pouvant être déplacées d'un emplacement à l'autre.

7. Magasin selon la revendication 6, caractérisé en ce que la section d'entrée (3) et la section de sortie (5) sont dans un même plan du dispositif d'emmagasinage, un emplacement provisoire (11) pour la marchandise en pièces étant prévu en un autre plan situé au-dessus ou au-dessous et relié à la section d'entrée ou de sortie par un élévateur.

8. Magasin selon la revendication 7, caractérisé en ce que lors du chargement et du déchargement du dispositif d'emmagasinage à une installation de chargement et de déchargement (16) située à un avant-poste, les pièces de marchandise sont disposées sur plusieurs niveaux placés les uns au-dessus des autres.

9. Plaque réceptrice pour un magasin selon une des revendications précédentes, caractérisée en ce qu'elle présente entre les emplacements des pièces des bosses (13) servant à éviter un glissement des pièces d'un emplacement à l'autre lors de l'extraction de la plaque hors de l'étagère ou de sa réinsertion dans celle-ci.

10. Plaque réceptrice selon la revendication 9, caractérisée en ce qu'elle consiste en une plaque plane comportant des plis transversaux entre les emplacements des pièces.

11. Plaque réceptrice selon une des revendications 9 ou 10, caractérisée en ce qu'elle comporte des trous (15) pour l'écoulement de liquide.

12. Plaque réceptrice selon une des revendications 9 à 11, caractérisée en ce que lorsqu'on empile des plaques réceptrices les bosses d'une plaque s'encastrent dans des creux de la plaque située au-dessus.
